# EUROPEAN PATENT APPLICATION

(11) **EP 1 579 766 A2**
(43) Date of publication of application: **28.09.2005**
(21) Application number: 05251650.7
(22) Date of filing: 18.03.2005
(51) Int. Cl.: A21C 11/16

(54) **Method and apparatus for extruding filled doughs**

(30) Priority: 24.03.2004 US 807402
(71) Applicant: KRAFT FOODS HOLDINGS, INC., Illinois 60093 (US)
(72) Inventor: Howard, Walter, Libertyville Illinois 60048 (US); Forneck, Kevin, Morton Grove Illinois 60053 (US)
(74) Representative: W.P. Thompson & Co.

(57) **Abstract**

A method and an apparatus are provided for extruding filled dough products with improved dough quality. Co-extruder arrangements are provided herein that reduce the occurrence of surface-defects in extensible dough during dough extrusion procedures. In particular, co-extruder arrangements are provided that yield high quality, low opacity dough without requiring costly or complicated equipment modifications.

## Description

### FIELD OF THE INVENTION

The invention generally relates to a method and apparatus for making co-extruded foods, and, in particular, a method and apparatus for making co-extruded foods including a filling material enrobed by dough with reduced opacity and surface shear.

### BACKGROUND OF THE INVENTION

The food industry is often confronted with challenges in dough handling and performance. Attainment of suitable quality dough products requires proper attention to dough visco-elastic behavior, gluten development, and stickiness, among other properties, during dough handling. Meeting all these criteria is further complicated when dough is processed in higher volume, commercial production environments run in a continuous mode. In a continuous processing mode, doughs often are subjected to significant mechanical forces associated with inducing dynamic movement of the dough into, through, and/or out of the systems that would not ordinarily be experienced by the doughs in batch or manual handling environments.

For instance, co-extruder arrangements are generally known for continuously producing a dough tube filled with an edible food material. Conventional co-extruder arrangements generally include means for feeding dough and filling material from different supply sources under pressure into an extruder nozzle assembly from which the materials are co-extruded. A conventional extruder nozzle assembly generally comprises an outer extrusion conduit having an inlet for receiving dough and an outlet for discharging dough in a tubular shape, and an inner extrusion conduit positioned co-axially inside the outer conduit having an inlet for receiving filling material and an outlet for discharging the filling material inside and as enrobed by the tubular shaped dough extrusion. The resulting extruded rope of food material is subsequently divided into pieces for further processing.

The conventional extruder nozzle assemblies have been designed with cross sectional geometries conventionally thought necessary to produce an extruded rope having and maintaining the intended cross sectional product shape. In one conventional nozzle assembly configuration for making filled dough products, the nozzle portion of the outer conduit initially defines a flow channel that tapers inward but ultimately feeds an outlet section in which the dough is fed through an additional length of conduit of constant diameter up until discharged, such as seen, for example in U.S. Pat. No. 5,620,713. As another conventional nozzle configuration for making filled dough products, discharge ends of both inner and outer conduits are tapered inward toward the point of discharge in a vertical extrusion configuration, such as seen, for example, in U.S. Pat. No. 4,882,185. In another configuration for making filled doughs, the nozzle assembly has an inner conduit for discharging filling material that protrudes from the end of the outer conduit used to discharge expansible double such that the filling material is not deposited within the dough until after the dough exits the outer conduit, such as seen, for example, in U.S. Pat. Nos. 3,615,675, 4,259,051, and 4,698,004. In U.S. Pat. Nos. 4,251,201 and 4,469,475, an extrusion head is described in which an inner tube is used to discharge filling inside dough conducted through an outer dough delivery tube, both of which have constant cross sectional diameters.

Although thought to be inadequately appreciated previously in the food industry, a need has been identified by the present investigators for developing a co-extruder arrangement that will reduce the occurrence of surface defects in co-extruded dough-containing products that impair or detract from the quality of the final baked product. In particular, the resulting surface texture of dough as discharged from an extrusion apparatus is an important factor in the quality ultimately achieved in a final baked product containing the dough. Physical disruptions of sufficient severity in the otherwise smooth continuity of dough surfaces can lead to discontinuities in the appearance and texture of the dough both before and after baking the dough. Dough that becomes roughened in texture during processing within an extruder will not independently recover the original smooth texture before it is discharged from the unit. Roughened texture in the extruded dough surfaces disperses impinging light significantly more than smoother dough surfaces. As a result, roughened or otherwise physically disrupted regions on the dough surface tend to have a different appearance than non-roughened, smoother surface portions of the dough. In particular, roughened texture surface regions on dough have a glassy or translucent appearance before the dough is baked, and a more opaque (browner) and more hardened texture than non-roughened regions after the dough is baked. The result is non-uniform organoleptic quality in the food product.

In addition, some filled bakery products present special challenges from a processing standpoint. For instance, bagels are a toroid-shaped bakery product having a tough outer crust and a softer inner crumb portion, which are formed from a heavy, tough and elastic high protein dough. Traditionally, the bagel dough is worked on a flour board and set in a warm place to rise, then kneaded again before being formed into rings. The rings are formed from balls of risen dough, either by poking a hole through the center of each ball or by rolling each ball into a long strip, shaping the strip into a ring, and then pressing the ends together. Then, the ringed dough is boiled in water or steamed in order to close the pores of the dough to form a skin, followed by baking the bagel in a hot oven. Consumers generally expect finished bagels to be seamless and uniform in thickness.

Ready-to-eat filled bagel products are an attractive concept due to the popularity of cream cheese-filled bagels and the like, and due to the extent they could eliminate the inconvenience to consumers of needing to slice a relatively tough bagel in half and then spread separately sourced cream cheese or other desired filling on the exposed bagel half. U.S. Pat. No. 6,444,245 B1 describes a method and apparatus for forming a toroidal-shaped filled bagel product in which a continuous ribbon of flattened bagel dough is curled around a filling deposited at the center of the top surface of the ribbon to form a cylinder with a filling material, and then the cylinder is cut into discrete logs of desired length with crimping of the dough at the log ends to seal the filling material within the log. The free ends of a log are brought together and fused to form a ring or toroid-shaped intermediate food product that can be further processed to form a filled bagel product.

There also is a particular need for an arrangement for preparing filled bagel dough products that can be operated in a more continuous automated manner while reducing the incidence of surface defects in the bagel dough. The present invention addresses the above needs and other needs and problems in a successful and cost-effective manner.

### SUMMARY OF THE INVENTION

This invention provides a method and apparatus for extruding filled dough products with improved dough quality. Co-extruder arrangements are provided in embodiments of this invention that reduce the occurrence of surface defects in extensible dough during dough extrusion procedures. In particular, co-extruder arrangements of this invention provide high quality, low opacity dough without requiring costly or complicated equipment modifications.

In one embodiment of this invention, there is a method for providing an extruded rope comprised of an outer dough layer and a filling material enrobed by the dough layer in which the occurrence of opaque or sheared dough is reduced or even completely eliminated.

For purposes herein, the terminology "opaque" or "opacity" refers to a discoloration of dough characterized by a glassy-appearance or translucency in the dough appearance before it is baked, or a browner appearance and harder texture than normal dough after it is baked, or both. The characterization of dough as "sheared" refers to dough having a rough, non-smooth exterior surface. Sheared dough has a peeled back surface effect imparted by drag force applied against the dough surface in a direction generally opposite to the forward direction in which the dough is conducted through and discharged from an extruder. This roughening effect of the dough surface is thought to adversely impact the gluten structure of doughs, and high protein content doughs like bagel doughs in particular. This surface defect tends to lead to uneven appearance or texture, or both, in the finished dough.

In the present invention, the reduction in or elimination of opaque or sheared dough may be achieved by several unique techniques, individually or in combination with each other.

In one embodiment of the invention, filled dough products are prepared with reduced opacity and surface shear damage in the dough by unique design features incorporated into an extrusion head of the extruder. In extruder arrangements contemplated by this invention, an extrusion head is used in combination with a dough and filling supply and feeding system in which the extrusion head comprises a multi-horn assembly including an inner horn used to discharge filling material that is located co-axially inside and circumferentially separated from an outer horn used to discharge dough that enrobes (surrounds) the filling material, forming an extruded rope-like structure.

It has been discovered that commercially available extruder horns have flow passageway lengths that are unnecessarily long for the purpose of extruding ropes of the intended shape, and, moreover, which undesirably cause shear damage in the dough due to the excessive horn lengths.

In one embodiment of this invention, shear damage and opacity in extruded dough is minimized by reducing the length of the outer horn to an extent that shearing in the extensible dough is reduced without losing the desired extruded rope shape. For a given dough formulation and extrusion conditions, the range of outer horn lengths meeting this functional balance can be determined empirically for a multi-horn extrusion head. After size reduction according to an embodiment of the present invention, the outer horn's L/D ratio, which is determined as the ratio of the outer horn length (L)/outer horn average internal diameter (D), is a value less than 5.0, particularly less than 4.5, and, in one further aspect, is a value in the range of 3.0 to 4.0. In one embodiment, the L/D values of outer horns used to prepare dough with reduced opacity and shear according to this invention are significantly lower than for conventional horns in which greater dough shear and opacity is experienced. It will be appreciated that the outer horn can be fabricated originally with dimensions that meet one or more of these L/D ratio value ranges, and that an actual physical re-dimensioning of a longer horn device is not required in those instances.

Reduction of the outer horn length (L) according to an embodiment of the present invention effectively reduces the drag exerted by the horn inner surfaces on the dough passing through the outer horn due to reduction of the inner surface area of the outer horn achieved by shortening its length. In another embodiment, lubricity of the dough is increased by increasing its moisture or fat content, which further helps to mitigate the occurrence of shear and opacity. In the instance of filled bagel dough products or other high protein content doughs in particular, experimental studies performed and described herein have shown unexpectedly good results in terms of opacity reduction in bagel dough in a horizontally-oriented extrusion head comprising a truncated conical-shaped outer extrusion horn and a cylindrical inner extrusion horn located coaxially inside the outer horn such that the inner horn discharges filling material within the outer horn, not beyond its discharge outlet, whereby dough enrobes the filling material inside the outer horn before the rope is extruded from the extrusion head. In a further embodiment, the outer horn of this extrusion head geometry has an L/D value within one or more of the ranges indicated above.

In another technique, the inner horn of the multi-horn extrusion head is minimized in length for the same purpose, albeit with less effect on the incidence of dough shear than the above-mentioned outer horn modification.

A vacuumized hopper may be used as part of the dough supply system for the extruder in which the magnitude of the vacuum applied to the dough supply is selected to a reduced level such that vacuum pressure is applied to the dough supply in the hopper that is strong enough to entrain dough from the dough supply into a dough transporter, yet is reduced enough to cause intermittent pauses to occur in the discharge of dough from the outer horn outlet, which induced dough flow behavior has been associated with shear reduction in the dough.

In one embodiment, the co-extruded dough product extruded by the extruder assembly is an outer bagel dough material that enrobes an inner filling comprising cream cheese. The co-extruded material is extruded as a rope-like composite that is cut into segments of finite lengths which are elongated and have their ends turned and merged/pinched together end-to-end to form a continuous ring or toroid shape that can be further processed to form a finished bagel product.

By reducing dough shear and opacity, this invention especially facilitates the use of higher protein content doughs, such as bagel doughs, in food processing schemes involving dough extrusion. Moreover, requirements are reduced for extraneous dough surface smoothening agents such as shortening, which is beneficial as high levels of shortenings may render doughs non-extensible.

As used herein, the term "dough" means a soft, thick mixture of dry ingredients including flour, and liquid including water, that can be kneaded, shaped, and baked. As used herein, the terminology "filling", "filler", or "filling material" is intended to refer to any edible product that can be coated by another edible extrudant.

### BRIEF DESCRIPTION OF THE DRAWING

Other features and advantages of the present invention will become apparent from the following detailed description of preferred embodiments of the invention with reference to the drawings, in which:
FIG. 1 is a schematic side elevation view of a co-extruder according to an embodiment of the invention.
FIG. 2 is a cross sectional view of an extrusion head used in the co-extruder according to FIG. 1, including broken lines indicating a modification incorporated into the extrusion head.
FIG. 3 is a cross sectional view, partly exploded, of the modified extrusion head shown in FIG. 2.
FIG. 4 is a flow chart of a method for making a filled bagel dough according to an embodiment of the present invention.
FIG. 5 is a perspective view of filled bagel dough rope extrudant produced by the extruder of FIG. 1 with a hidden feature shown by broken lines.
FIG. 6 is a top cross-sectional view of a filled bagel dough product according to an embodiment of the present invention.

The features depicted in the figures are not necessarily drawn to scale. Similarly numbered elements in different figures represent similar components unless indicated otherwise.

### DETAILED DESCRIPTION OF THE PREFERRED EMBODIMENTS

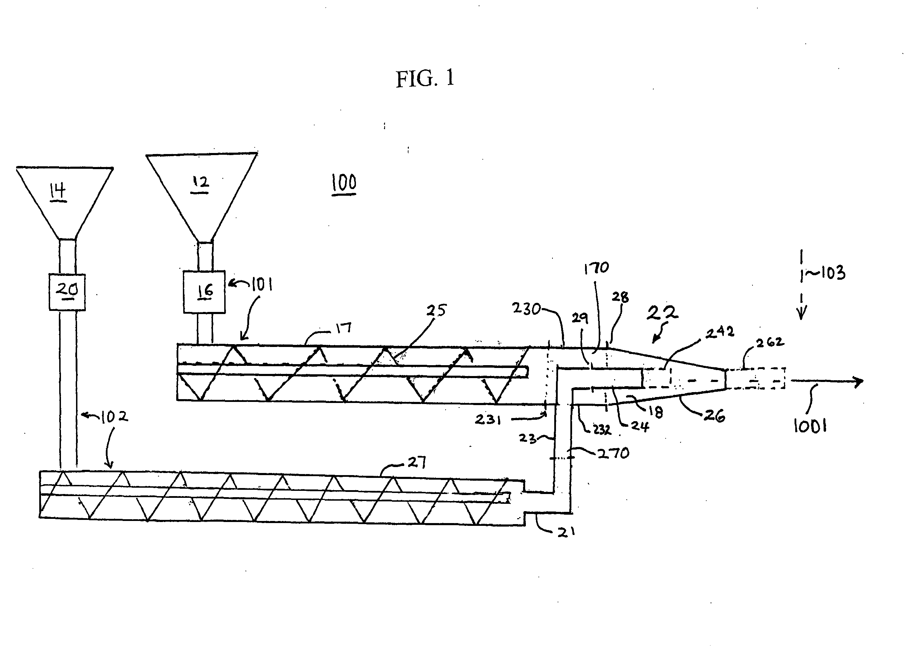

Referring to FIG. 1, a co-extruder **100** for preparing multi-layered edible extrudants according to embodiments of the invention is illustrated. The extrudants are multi-layered in the sense that at least one outer dough layer enrobes an inner filling material. Co-extruder **100** includes a first extruder **101** used to feed dough to extrusion head **22,** and a second extruder **102** used to feed filling to extrusion head **22.** In this non-limiting illustration, a linking mechanism **230** is used in conducting both the dough output of extruder **101** and the filling output of extruder **102** to extrusion head **22,** while also providing structures for removable attachment of an outer extrusion horn **26** via a connection **28** and an inner extruder horn **24** via a connection **29,** as discussed in more detail hereinafter.

The first extruder **101** has a dough supply container **12,** a vacuum feeding mechanism 16 for the dough supply, and a dough conveying mechanism **25.** Second extruder **102** has a filling material supply container **14,** a vacuum feeding mechanism **20** for the filling supply, and a filling conveying mechanism **27.**

Extrusion head **22** includes inner and outer extruder horns **24** and **26,** respectively. The extrusion head **22** is configured in a manner that permits a multilayered edible extrudant to be produced by the co-extruder system **100** in which an outer dough layer incurs less surface damage from shearing forces during extrusion, and the resulting dough has reduced opacity, as will be described in more detail hereinafter.

Dough feed mechanism **16** may be an in-line piston or other suitable device for creating suction pressure on dough in dough supply **12** so that dough is entrained into an inlet for screw conveyor **25.** Dough feed mechanism 16 includes standard a vacuum pressure controller (not shown) permitting an operator to adjust the magnitude of the force of vacuum pressure being drawn on the dough in supply container **12.**

Screw conveyor **25** is housed within an enclosed passageway **17** extending between the vacuum feeding mechanism **16** and an outer passageway **170** defined by tube **232** of linking mechanism **230,** which in turn feeds extrusion head **22.** In this illustration linking mechanism **230** is removably attached to passageway **17** via a connection **231** by any convenient means, such as via mating threading on adjoining tube ends, with or without a standard lock nut type feature.

Screw conveyor **25** may be an enclosed twin-screw transport mechanism suitable for doughs. Twin-screw transport mechanisms suitable for dough transport are commercially available for use in food grade extruders. Although not limited thereto, screw conveyor **25** can comprise a co-rotating intermeshing double screw transport mechanism operating in accordance with a generally known double-spindle principle. Although not limited thereto, a screw or auger type conveyor, and especially a twin screw arrangement, is preferred for transporting the dough to the extrusion head **22** because it is a relatively low shear dough transport mechanism, causing less surface shear damage to the dough as it is transported to the extrusion head **22.**

Although not limited thereto, filling feed mechanism **20** may be a similar device as feed mechanism **16,** and filling conveying mechanism **27** may be a similar device as conveyor **25.** In general, any filling feeding mechanism or system capable of delivering filling in a controlled feed manner may be used to feed filling to extrusion head **22.** For instance, a pump, auger, or rotary valve, or other feeding mechanism suitable for inducing filling material to move in a controlled manner from filling supply container **14** to the extrusion head **22** may be used. In this non-limiting illustration, linking mechanism **230** includes an integral ell-fitting or similar tubular connector **23** defining an air-tight passageway **270** for conducting filling discharged from a standard discharge nozzle **21** on filling extruder **102** into and through the outer dough passageway **170** of linking mechanism **230** until linking up to inner horn **24** attached inside extrusion head **22.**

The extrusion head **22** comprises the outer horn **26** in a configuration in which it axially extends along and circumferentially extends completely around the inner horn **24;** and, in this way, the coaxially aligned outer horn **26** and inner horn **24** form an annular-shaped passageway **18** therebetween used to discharge dough while filling is concurrently discharged from the inner horn **24.** This configuration permits dough conducted through and discharged from outer horn **26** to enrobe filling material conducted through and discharged from inner horn **24.**

Outer horn **26** is connected to linking mechanism **230** via any suitable linking mechanism **28,** which may be, for example, integral mating threading provided at the respective ends of passageway **270** of linking mechanism **230** and the horn **26.** Similarly, inner horn **24** can be attached to an end of passageway **270** of integral ell-fitting **230** of linking mechanism **230** via a linking mechanism **29,** which also may be mating threading provided on the respective ends of these parts. As will be appreciated, the outer horn **26** and inner horn **24** of extrusion head **22** are individually and independently attachable/detachable to their respective feed lines of the dough and filling extruders **101** and **102,** respectively. For purposes of the descriptions herein, references to an axial direction means parallel to the direction of the centerline **1001** of the extrusion head **22;** while a radial direction will be perpendicular thereto. In one embodiment, the centerline **1001** of extrusion head **22** is oriented horizontally, i.e., approximately perpendicular to the force of gravity **103.** Therefore, in this embodiment, co-extrusion is not performed vertically or parallel to the force of gravity, although that scheme is also contemplated within other embodiments of the invention.

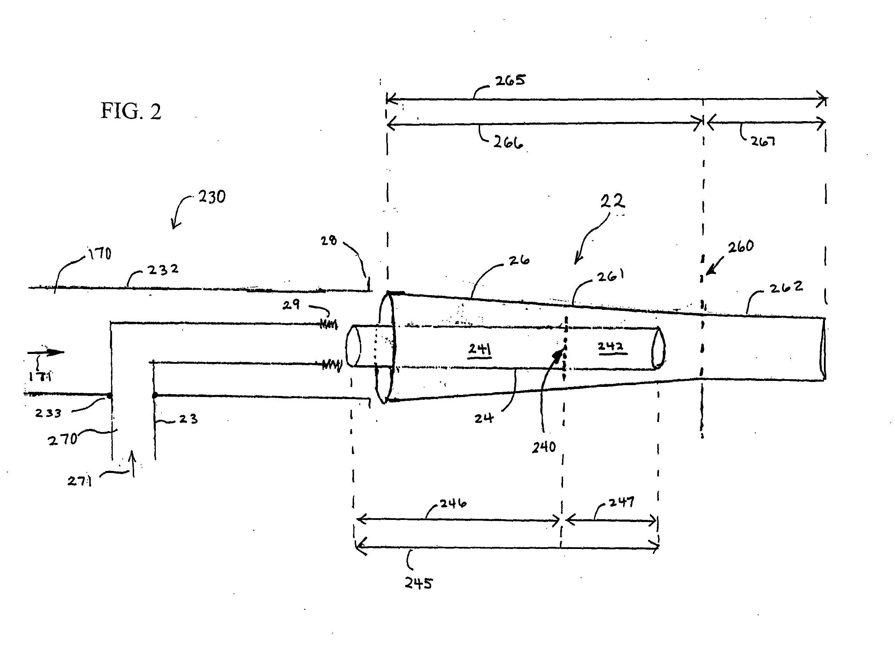

Referring now to extrusion head **22** in FIG. 2, the broken lines indicate significant modifications made to a standard extrusion head in accordance with an embodiment of the present invention. The portion **242** (shown by broken lines) is an omitted part of inner horn **24,** and the portion **262** (also shown by broken lines) is an omitted part of outer horn **26.** That is, before co-extruder **100** is put into operation to manufacture filled dough rope extrudants, the outer extruder horn **26** is shortened to an extent at which shearing in the dough is reduced, without losing the desired shape formation in the extrudant. The inner extruder horn **24** also is shortened in the same general manner.

Referring now to FIG. 2, in this embodiment, the outer extruder horn **26** originally has a total axial length **265** comprised of an inlet portion **261** of axial length **266** and an outlet portion **262** of axial length **267.** The inlet portion **261** has a truncated conical shape in which the cross sectional diameter tapers inwardly in cross-sectional diameter down to approximately the diameter of outlet portion **262.** As illustrated, the outer horn **26** is attached to outer tube portion **232** of linking mechanism **230** via threading or other suitable linkage means **28.** As noted, dough flows through passageway **170** of linking mechanism **230** to outer horn **26.**

Filling material **271** is conducted via passageway **270** of ell-fitting **23** of linking mechanism **230** into inner horn **24.** Ell-fitting **23** is fixed in place where it penetrates the tube **232** of linking mechanism **230** such as via a weld **233.** The inner extruder horn **24** originally has a total axial length **245** and a uniform cross sectional diameter along its axial length **245.** As illustrated, the inner horn **24** is attached to ell-fitting **23** defining filling feed passageway **270** via threading or other suitable linkage means **29** at a location that is located partly inside linking portion **270.**

In one non-limiting illustration, the outer extruder horn **26** originally has a total length **265** of 7 inches (18 cm) comprised of a 5 inch long **(266)** inlet portion **261** and a 2 inch long **(267)** outlet portion **262.** The 5 inch long inlet portion **261** has a truncated conical shape in which the cross sectional diameter tapers inwardly from about an initial 2 inch (5 cm) cross-sectional diameter (1.875 inch inner diameter) down to about a 1 inch (2.5 cm) cross-sectional diameter (0.875 inch I.D.). The inner extruder horn **24** originally has a total length **245** of 5 inches (13 cm). In this illustration the inner horn **24** has a uniform diameter of 1 inch (0.875 inch I.D.) along its length. In this illustration, the outer horn length **265** is reduced about 30% by cutting off the 2 inch long **(267)** outlet portion **262** of the outer horn **26** at cutting point **260.**

The axial length **245** of inner horn **24** also is reduced at cutting point **240,** by an amount of about 40% by cutting off portion **242** thereof having an axial length **(247)** of about 2 inches, leaving inner horn portion **241** with a length **(246)** of 3 inches. The outer and inner horns can be cut in any convenient manner using cutting equipment that retains the cross sectional shape at the cut ends.

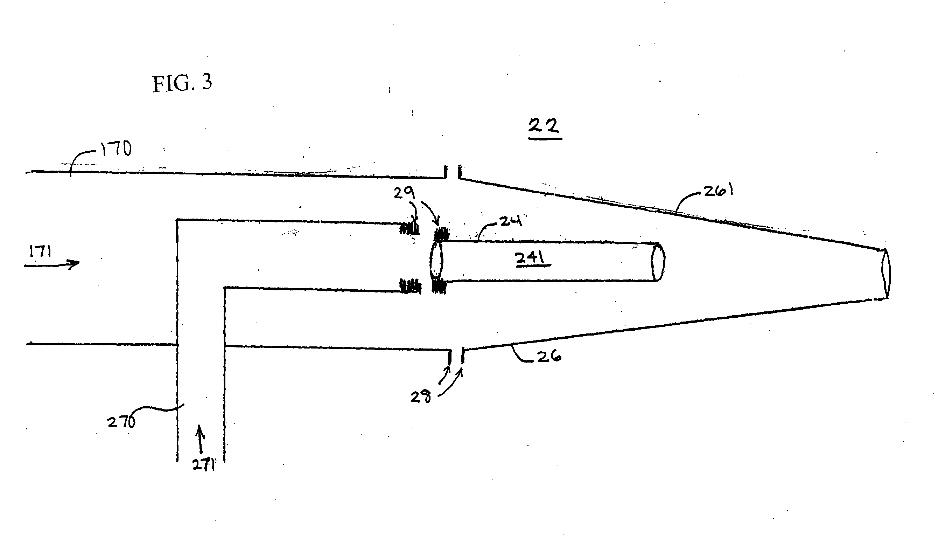

Referring to FIG. 3, the resulting extrusion head **22** obtained from these horn shortening operations is shown. Outer horn portion **261** and inner horn portion **241** remain. The funnel "throat" **262** (Fig. 2) of outer horn **26** has been eliminated. Because the attachment points of the respective extruder linkage mechanisms to the inner and outer horns on their respective inlet sides are not axially aligned, the outlet ends of the shortened outer and inner horns are not axially aligned. As illustrated, the outlet of the inner horn is located inside and axially behind that of the outer horn. The inner horn **24** is completely housed inside the tapered portion of the outer extruder horn **26.**

In this illustration, the outer and inner horns have concentric circular geometries, which are convenient for forming a rope-shaped extrudant, which in turn is convenient for forming bagels, as explained below. However, they are not limited thereto. They can independently have any cross-section geometries desired in the product.

Commercially available portioning apparatuses suitable for dough and filling, such as VEMAG's ROBOT 500 extruder device, manufactured by VEMAG Maschinenbau GmbH, may be adapted for use in conjunction with an extrusion head comprising a modified multi-horn assembly as described herein, to provide an improved co-extrusion system for dough containing foodstuffs. As noted, in a preferred embodiment the modified multi-horn assembly is attachable/detachable to respective dough and filling portioning apparatuses via an integral linking means commonly provided at each of the terminal ends of the filling and dough supply conduits. For instance, the ends of the supply conduits and the horns may be threaded to provide detachable attachments. As explained above, the multi-horn assembly that may be commercially obtained is modified in accordance with an embodiment of this invention such that the axial length and geometry of the outer horn is changed and the axial length of the inner horn is modified by significantly shortening these horns to reduce shear and opacity in the dough, yet without loss of the intended product shape and integrity.

As explained above, to form an extruded dough into the proper shape an outer horn is used. Commercial outer horns have a long final path length, sometimes as long as several inches, which have been thought necessary for proper formation of the piece. However, the longer this narrow path length the greater the shear that is exerted on the dough, often time resulting in poor dough quality referred to as opaque dough or sheared dough. According to an embodiment of this invention, the length of the final path of the outer horn effectively has been minimized sufficient to at least reduce if not eliminate opaque dough yet without compromising the intended extruded piece shape.

It is thought that the shortened length and/or modified geometry of the outer horn minimizes the narrowest path the dough must pass through and therefore eliminates or vastly reduces dough shear experienced during co-extrusion. Additionally, some measurable reduction in dough shear also can be achieved by shortening the inner injection horn used for dough filling in a co-extrusion operation, albeit less reduction than that observed in connection with shortening the outer horn.

The extent of axial length shortening to be provided on either the outer or inner horn can be determined empirically as an axial length or range of axial length values for a given extrusion head at which dough opacity is measurably reduced without loss of the intended extruded rope shape, as compared to horn lengths of greater axial length.

In one embodiment of this invention, shear damage and opacity in extruded dough is minimized by reducing the length of the outer horn to an extent that shearing in the extensible dough is reduced without losing the desired extruded rope shape. In one embodiment, the L/D values of outer horns used to prepare dough with reduced opacity and shear according to this invention are significantly lower than for conventional horns in which greater dough shear and opacity is experienced. For a given dough formulation and extrusion conditions, the range of outer horn lengths meeting this functional balance can be determined empirically for a multi-horn extrusion head. For instance, after size reduction according to an embodiment of the present invention, the outer horn's L/D ratio, which is determined as the ratio of the outer horn length (L)/outer horn average internal diameter (D), is a value less than 5.0, particularly less than 4.5, and, in one further aspect, is a value in the range of 3.0 to 4.0. The L/D value is a dimensionless value, so the length measurements units used for L and D need to be the same.

In embodiments of the present invention, the extruder barrel, in which the twin-screw transport mechanism is housed that feeds the extrusion horn assembly, has an internal diameter that is at least the same if not larger in diameter than the extrusion outer horn. Moreover, the measurement of the length "L" of the outer horn begins on the inlet side where that component concentrically surrounds the inner horn such that resulting intervening passageway through which the dough flows at that point is constricted considerably from what the dough experienced in the twin-screw transport system.

For example, the above-mentioned RC2001 multi-horn assembly supplied by VEMAG has an outer horn L/D ratio of about 5.7. After shortening the outer horn by eliminating the 2 inch dispensing end tip of the original "funnel"-shaped horn and using the remaining 5 inch long truncated conical shaped member in which the I.D. tapered from 1.875 (inlet) to 0.875 (outlet) inches according to the above-indicated illustration of an embodiment of this invention, the L/D value was reduced to about 3.6. It will be appreciated that the outer horn can be fabricated originally with dimensions that meet one or more of these L/D ratio value ranges, and that an actual physical re-dimensioning of a longer horn device is not required in those instances. Reduction of the outer horn length (L) according to an embodiment of the present invention effectively reduces the drag exerted by the horn inner surfaces on the dough passing through the outer horn due to reduction of the inner surface area of the outer horn achieved by shortening its length. In another embodiment, lubricity of the dough is increased by increasing its moisture or fat content, which further helps to mitigate the occurrence of shear and opacity.

Attempts to inhibit the shearing problem by increasing the shortening content of the bagel dough may relieve the problem somewhat but may have the unacceptable drawback of significantly softening the dough such that it can not be processed into a tough, chewy bagel product.

Dough shearing also can be significantly reduced by reducing the vacuum (suction) force applied to the dough at the dough supply hopper. Moreover, this operational change can be implemented without disrupting or precluding the process wherein the dough supply is sucked down into a twin-screw extruder that, in turn, feeds dough at a sufficient rate to the extrusion horns. At significantly reduced vacuum levels at the feed hopper, dough progression through the extruder may occasionally hesitate or pause momentarily at the outer horn in its forward movement before resuming steady forward movement and discharge. However, it has been observed that the dough quality is not significantly adversely affected by the pauses. Indeed, it may be possible that the resonant-like progression of the dough into and out the outer horn has some beneficial effect in preserving good dough quality.

While each of these individual techniques of shortening either or both the extrusion horns and reducing the vacuum at the dough hopper has been observed to measurably improve dough quality by reducing opaque dough, the combination of these techniques has been observed to eliminate all or essentially all opaque dough.

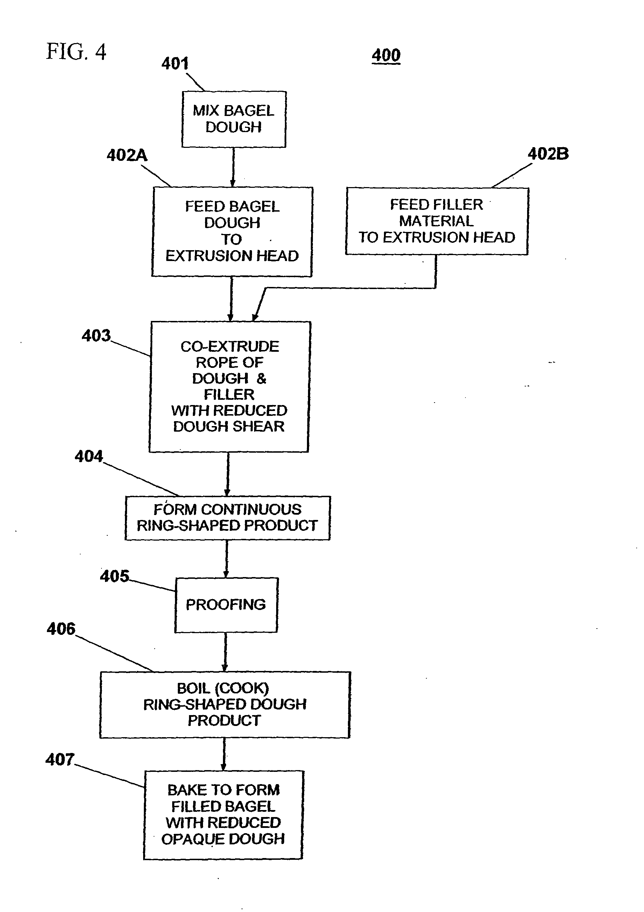

Referring to FIG. 4, a method **400** for making a filled bagel dough product according to an embodiment of the invention is described. For example, the filler material may be cream cheese.

### Bagel Dough Preparation (401)

Although the present invention is not limited to bagel dough, it is used in a preferred non-limiting embodiment thereof, and the invention is illustrated with examples using bagel dough. As used herein, the term "bagel dough" refers to a very tough, high protein dough, including those known for making bagels using conventional bagel-making techniques. The bagel dough generally comprises flour, water, yeast, salt, and sometimes sugar. The flour should be a high gluten flour, such as clear spring wheat flour with a protein content of at least about 11 %, more particularly about 12-15%, of the total flour weight. The preferred flour is high in protein content and ash to give the bagel product the distinctive chewy texture associated with bagels. Water is typically added in an amount of about 50-55% of flour weight. Salt content is typically about 1-2.5% of flour weight, and yeast is added in an amount of typically about 0.5-2% of flour weight. Sugar, which can be used as a food for yeast, can be added up to about 4% of flour weight. These ingredients can be separately sourced and combined for making bagel dough, or subcombinations thereof comprising several or more of the dry components can be obtained and used as a preblended ingredient. All percentage amounts of dough or filling ingredients described herein are by weight unless indicated otherwise.

Any suitable dough mixer may be used to mix the dough ingredients for a suitable period of time, e.g., for about 7-15 minutes, during which time the dough rises in temperature. The dough is allowed to develop for a period until it becomes stretchable and workable (extensible). Dough must be extensible and not overly sticky to run properly in the extruder. The dough generally is premixed before introduction into the hopper of an extruder. A single screw (auger) or twin-screw extrusion arrangement may be used to transport the dough from the supply hopper to the extrusion head. For instance, a co-rotating intermeshing twin-screw extruder operating on the double spindle principle may be used to transport the dough to the extrusion head without unduly compressing it. In one preferred embodiment, the dough supply hopper is vacuumized.

### Bagel Dough and Filling Material Supply and Transport At Extruder (402A, 402B)

Bagel dough and filling material are separately fed to a common extrusion head, such as using an arrangement as described relative to FIG. 1 above. The dough may be transferred from the dough mixer to a hopper of a co-extruder in any convenient manner. The dough is introduced into a hopper, which in turn supplies the dough to the outer extruder horn, while filling material is supplied to the inner extruder horn.

### Co-Extrusion of Filled Bagel Dough Rope (403)

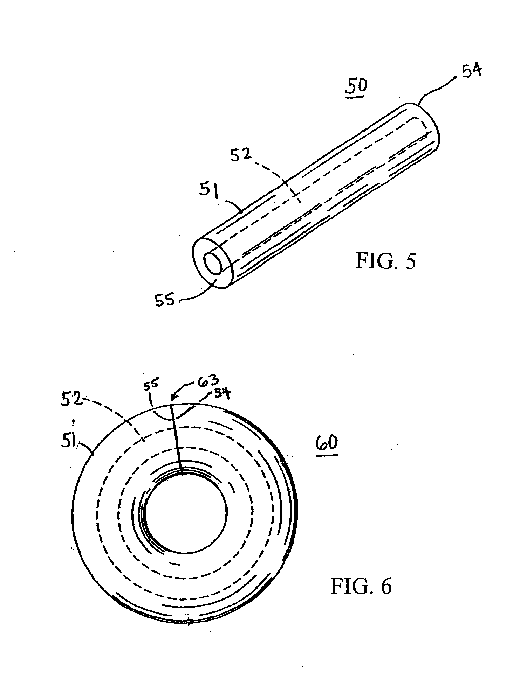

The tube of dough extruded from the outer horn enrobes (surrounds) the filling that is simultaneously discharged via the inner horn as previously described. The extruded rope cut intermittently at a desired length using any suitable or conventional cutting means used for that general purpose. Referring to FIG. 5, the rope **50** that is extruded has been cut to length and has two free ends **54** and **55.** The bagel dough **51** enrobes filling material **52.**

### Bagel Shape Formation (404)

Referring to FIG. 6, the free ends **54** and **55** of the extruded rope **50** of filled bagel dough are manipulated together and merged **63** by crimping effective to form a continuous ring or toroid shaped intermediate food article **60.**

### Dough Proofing (405)

The filled bagel product is then placed to proof within a warm container for about 20-90 minutes, at about 75-125°F, which permits the yeast to raise the dough.

### Boiling - Bagel Dough Cooking (406)

After proofing, the filled bagel product is boiled in water, or steamed, effective to partly cook the dough and form a toughened skin or outer crust on the dough. Boiling gelatinizes the starch at the surface of the bagel.

If cooked by boiling, the filled bagel is suspended in water at a temperature exceeding 200°F for at least about 25 seconds per side, to fully cook the dough and form a toughened skin on the bagel surface. Alternatively, if steamed, the filled bagel product may be accomplished at the beginning of a baking cycle in an oven or in the first zone of a multi-zone oven, such as described below, or alternatively, the filled bagel may be placed in a steamer and steamed for about 1-15 minutes to provide a similar result. The steaming time generally will depend on the thickness of the dough around the filling material. During steaming, the surface temperature of the dough may rise to about 200-300°F.

If a relatively heat-sensitive filling material is used, such as cream cheese for example, the filled bagel can be chilled or frozen after proofing and before baking sufficient to cool the internal temperature of the bagel in the filling portion and help protect the filling during subsequent boiling or steaming of the bagel.

In one embodiment, it is preferable to cool or chill the boiled or steamed product sufficient to cool the filling material to help protect the filling during subsequent browning of the bagel.

Optionally, before further processing is performed on the filled bagels, toppings may be added onto the filled bagels. For example, the boiled filled bagel material can be lightly wetted at its surface and toppings, such as dehydrated seeds, grains, raisins, or nuts, are then sprinkled thereon.

### Baking (407)

The boiled (or possibly pre-steamed) filled bagel product generally is heated in an oven to sufficient brown the crust to the extent desired. The browning temperature can vary and may be between about 350-600°F for about 1-15 minutes, sufficient to brown the exterior crust of the bagel dough. The boiled or steamed bagel product is already significantly cooked, and the necessary browning time is thus shortened in many cases.

The resulting browned, cooked bagel product can be packaged in any convenient manner including conventional packaging techniques used for bagels.

It will be appreciated that the filled bagel product may be frozen at any time after proofing, and boiling or steaming, and the final bagel product may be stored in a freezer. Freezing preferably is provided effective to cool a heat-sensitive filling material to about 1 to about 40 °F. The resulting filled bagel can be defrosted and/or reheated in a microwave oven, toaster, radiant lamp oven, conventional oven, or the like, for consumption.

Filling materials useful in the making of filled dough products according to this invention include, for example, such as meats and meat products such as meats (e.g., precooked hamburger, shredded beef, steak pieces, ham pieces, chicken pieces, turkey pieces), processed meat products (e.g., bacon), processed meat dough or batter (e.g. sausage); dairy products such as cream cheese, heat-flowable hard or soft cheese, process cheese, sour cream; egg products such as precooked egg whites, yolk, scrambled egg; seafood products (e.g., lox); vegetables or vegetable products; fruits or fruit products (e.g., jams, jellies); a processed legume product (e.g., a peanut butter, a soy meal product), and so forth, individually or a combination thereof.

For example, the co-extrusion techniques of this invention may be used to manufacture as a filled bagel such as a cream cheese filled bagel, or a breakfast bagel sandwich, in which the filling may include a combination of egg, cheese, and bacon or sausage. The finished filled bagel or bagel sandwich may be chilled or frozen until reheated and consumed at a later date. The chilled or frozen filled bagel may be packaged for convenient and stable handling and storage.

For sake of simplifying the illustrations of filled doughs made herein, only a two-layered extrudant making apparatus and its operation has been discussed herein in detail. However, it will be appreciated that the principles of the invention also can be applied to extrusion heads that include three or more concentric horns to form extrudants in which dough enrobes multiple inner layers, and/or where dough is included as an intermediate or inner layer of the multi-layered extrudant.

Although this invention has been illustrated for manufacturing of filled dough products, and particularly filled bagel dough products, it will be appreciated that the methods and equipment arrangements of this invention are generally applicable to filled viscous flowable materials in general that may tend to experience undesirable surface roughening problems in the outer layer.

The Examples that follow are intended to illustrate, and not limit, the invention. All percentages are by weight, unless indicated otherwise.

### EXAMPLES

### Example 1:

A series of samples of filled doughs were prepared on a co-extruder to evaluate the effect of several equipment and operational modifications on dough opacity of the extruded filled dough products from the following modifications. These investigated modifications included (i) reducing the path lengths at the extrusion head of the outer extruder horn and the inner extruder horn; and (ii) reducing the suction force (vacuum) used to draw dough into a co-rotating intermeshing twin-screw transport mechanism within the extruder. The reduction of the path length of the outer horn also effectively modified its cross sectional geometry at its new discharge end, while the cross sectional geometry of the inner horn of reduced path length remained unchanged after its modification.

The filled dough product used for these experiments was a cream cheese filling that was enrobed in bagel dough. The bagel dough formulation used in these experiments had the recipe described in Table 1.

**Table 1**

| **Ingredient** | **Baker's %** |
|---|---|
| Flour | 100.00 |
| Water | 54.00 |
| Granulated Sugar | 3.00 |
| Flour Conditioner | 2.00 |
| Instant Dry Yeast | 2.00 |
| Salt | 1.50 |
| Shortening 180 | 8.00 |
| Emulsifier | 1.00 |
| Calcium Propionate | 0.25 |

The flour had a protein content of 11.5%. The flour conditioner was PZ44®, which contains whey and I-cysteine monohydrochloride, and was obtained from Foremost Farms. The emulsifier was PANODAN®DATEM, which contains diacetyl tartaric acid esters of monoglycerides, and was obtained from Danisco.

The filling material was Kraft PHILADELPHIA BRAND@ Cream Cheese chilled to 50°F while held in the extruder supply container.

The extruder equipment used included a VEMAG dough portioning and co-extrusion system. Two VEMAG ROBOT 500 portioning units were set up side-by-side and were adapted to support co-extrusion functionality using a length-modified outer horn and a length-modified inner horn. The modified horns were attachable/detachable to a VEMAG standard linking mechanism that is directly attached to the dough-dedicated ROBOT 500 portioning apparatus via threading and a lock nut. The VEMAG linking mechanism is fluidly connected with each of the respective extrudant discharge ends of the filling material-dedicated ROBOT 500 portioning apparatus and the dough-dedicated ROBOT 500 portioning apparatus. Reference is made to FIGS. 1-3, discussed above, which describe features of a linking mechanism that are common to the commercially-obtained VEMAG linking mechanism used in these experiments. In a number of experimental runs various modifications were made to that system to evaluate the affects of those modifications on the resulting co-extruded filled dough product.

The commercially-obtained VEMAG extrusion head assembly of components included an outer horn that was originally supplied for use in the extrusion head of the extruder as a multi-dimensional nozzle having a 5 inch (127 mm) long inlet section that tapered inwardly from an inner diameter of 1.875 inch (48 mm) down to an inner diameter of 0.875 inch (22 mm), as a truncated conical (or throatless funnel) shape, which merged into a 2 inch (51 mm) long discharge outlet end having a constant 22 mm I.D. As such, the outer horn originally was 7 inches (178 mm) in length, including the 5 inch long tapered inlet section and the 2 inch long tubular outlet section.

For purposes of some of the experimental runs performed and described herein, the outer horn was shortened by having the original 2 inch (51 mm) tubular discharge end cut off and discarded; leaving the 5 inch (127 mm) long tapered section as the outer discharge horn member that was used in these experiments. The basic geometry of the original outer horn and its shortened version is generally illustrated in FIGS. 2 and 3, which were discussed above.

The commercially-obtained VEMAG extrusion head assembly of components also included an inner horn that was originally obtained for use in the extrusion head that had an original length of 5 inches (127 mm) and a constant inner diameter of 0.47 inch (12 mm). For purposes of some experimental runs performed and described herein, the original 5 inch (127 mm) length of the inner horn was shortened 2 inches (51 mm) leaving a 3 inch (76 mm) long inner horn member that was used in these experiments. In several runs, the inner horn was omitted entirely. In the runs in which the inner horn was omitted, the filling material was not fed and inserted within the dough. The basic geometry of the original inner horn and the shortened version thereof is illustrated in FIGS. 2 and 3, which were discussed above.

As to the vacuum settings used on the extruders for intake of dough and filling, either a "100%" device setting or a "50%" device setting were used simultaneously on both extruders.

One of two different types of co-rotating intermeshing extruder screw sets were used in these experiments as arranged in each of the extruder barrels of the dough extruder and filling extruder, and these two types were commercially-available VEMAG screw sets 72CC or 72N.

For the experiments, the double screw speed of the dough-dedicated extruder was set at an rpm providing an average flow of dough of 3.25-4.5 Ib./minute. The double screw speed of the filling material-dedicated extruder was set at an rpm providing an average flow of filling of 1.5-2 1b./minute. In dough only runs, the flow of dough provided was 4.5-6 1b./minute.

The dough and fillings were extruded at room temperature (i.e., about 72°F) for all runs.

The bagel dough was mixed, extruded, panned, proofed, boiled and baked under conditions indicated in Table 2. The extruder conditions listed in Table 2 commonly apply to both the dough-dedicated extruder and the filling material-dedicated extruder.

"Mix Time" in Table 2 refers to the time period when the first dry components were blended to a somewhat homogenous level and then fluid components (viz., water, fats, emulsifiers, liquid sugars) were added. These components were blended in at low speed for approximately one minute and then the mixer was turned up to a high speed to complete mixing and develop the gluten structure of the dough. "1LD" represents 1 minute a low setting for dry components; while "H" represents high speed; and "L" represents low speed when all dough components, including water, have been added to the blender. All batches were mixed the same except for the final stage of dough development when using high speed, then the time could vary.

Regarding the "Baking TOP:BOTTOM air" conditions indicated in Table 2, this refers to the configuration of impingement deflectors in the oven. There were four locations for deflectors in both the top and bottom sections of the oven. For instance, "Top In 2-4" means deflectors were located in positions 2, 3, and 4 while position 1 was blocked as product entered the oven; similarly, "Bottom In 1-3" means deflectors were located in positions 1,2, and 3 while position 4 was blocked. "Blocked" means no impingement air was being blown onto the product.

**Table 2**

| **Run** | | **C1** | **1** | **2** | **3A** | **3B** | **4A1** | **4A2** | **4B1** | **4B2** |
|---|---|---|---|---|---|---|---|---|---|---|
| Dough | Formula | I | I | I | I | I | I | I | I | I |
| | Absorp.,% | 54 | 54 | 54 | 54 | 54 | 54 | 54 | 54 | 54 |
| | Mix Time | 1 LD, 1H, 3H | 2.5H | 2.5H | 3H | 3H | 3H | 3H | 3H | 3H |
| Extruder | Outer Horn, length in mm | 178 | 178 | 178 | 178 | 178 | 127 | 127 | 127 | 127 |
| | Inner Horn, length, in mm | 127 | 127 | 127 | 0 | 0 | 0 | 0 | 127 | 127 |
| | Screw Set | 72N | 72N | 72C C | 72N | 72N | 72N | 72N | 72N | 72N |
| | Vacuum,% | 100 | 100 | 100 | 100 | 50 | 100 | 50 | 100 | 50 |
| | V-speed | 19 | 22 | 22 | 19 | 19 | 22 | 22 | 22 | 22 |
| | Weight | 0.27 | 0.27 | 0.27 | 0.275 | 0.265 | 0.265 | 0.27 | 0.28 | 0.28 |
| | Piece: | | | | | | | | | |
| | Length, inch | 6.5 | 6.5 | 6.5 | 6.5 | 6.5 | 6.5 | 6.5 | 6.5 | 6.5 |
| | Crimper | blade | blade | blade | blade | blade | blade | blade | blade | blade |
| | Piece/min. | 50 | 50 | 50 | 50 | 50 | 50 | 50 | 50 | 50 |
| Panning | Pan Type | flat | flat | flat | flat | flat | flat | flat | flat | flat |
| | Pieces/pan | 15 | 15 | 15 | 15 | 15 | 15 | 15 | 15 | 15 |
| Proofing | Temp.,°F | 100 | 100 | 100 | 85 | 85 | 85 | 85 | 85 | 85 |
| | Rel. Hum. | 50 | 50 | 50 | 45 | 45 | 45 | 45 | 45 | 45 |
| | Time | 30 | 30 | 30 | 30 | 30 | 30 | 30 | 30 | 30 |
| Boiling | Water Temp.,°F | >200 | >200 | >200 | >200 | >200 | >200 | >200 | >200 | >200 |
| | Time/side (sec) | 30 | 30 | 30 | 30 | 30 | 30 | 30 | 30 | 30 |
| Baking | Temp.,°F | 450 | 450 | 450 | 425 | 425 | 445 | 445 | 445 | 445 |
| | Time, min | **8** | **8** | **8** | **8** | **8** | **8** | **8** | **8** | **8** |
| | Top: Bottom Air | 3@ Top in 2-4, 3@ Bot. in 1-3 | 3@ Top in 2-4, 3@ Bot. in 1-3 | 3@ Top in 2-4, 3@ Bot. in 1-3 | 3@ Top in 2-4, 3@ Bot. in 1-3 | 3@ Top in 2-4, 3@ Bot. in 1-3 | 3@ Top in 2-4, 3@ Bot. in 1-3 | 3@ Top in 2-4, 3@ Bot. in 1-3 | 3@ Top in 2-4, 3@ Bot. in 1-3 | 3@ Top in 2-4, 3@ Bot. in 1-3 |
| | Internal Bake Temp., ° F | >200 | >200 | >200 | >200 | >200 | >200 | >200 | >200 | >200 |

It was observed that the extruded rope of Control 1 ("C1") was more sticky out of the mixer, and on the conveyor belt that received products from the extrusion head, as compared to the extruded ropes of the other runs that represented embodiments of the present invention.

The dough quality results and several corresponding run parameters for this set of experimental runs are set forth in Table 3.

**Table 3**

| **Run** | **Outer Horn, length in mm** | **Inner Horn, length in mm** | **Screw Set** | **Vacuum Set (%)** | **Dough Quality*** |
|---|---|---|---|---|---|
| C1 | 178 | 127 | 72N | 100 | 5 |
| 1 | 178 | 127 | 72N | 100 | 5 |
| 2 | 178 | 127 | 72CC | 100 | 5 |
| 3A | 178 | 0 (no horn) | 72N | 100 | 4 |
| 3B | 178 | 0 | 72N | 50 | 1 |
| 4A1 | 127 | 0 | 72N | 100 | 2 |
| 4A2 | 127 | 0 | 72N | 50 | 0 |
| 4B2 | 127 | 127 | 72N | 100 | 1 |
| 4B2 | 127 | 127 | 72N | 50 | 1/0 |

| | | | | | |
|---|---|---|---|---|---|
| * Dough Quality rating was based upon the presence of opaque dough as follows: 5= high amount of opaque dough 4= moderate to high amount of opaque dough 3= moderate amount of opaque dough 2= slight to moderate opaque dough 1= slight amount of opaque dough 0= no opaque dough observed | | | | | |

### Example 2:

An additional set of experimental runs were conducted using the same extruder apparatuses and extrusion head assembly arrangement therewith as that used for the experiments of Example 1, except under the conditions indicated in Table 4. The Formula II dough was the same as the Formula I dough described in Example 1 except that it additionally contained 1% BP yeast.

**Table 4**

| **Run** | | **C2** | **1A** | **1B** | **2A** | **2B** | **3** |
|---|---|---|---|---|---|---|---|
| Dough | Formula | I | I | I | II | II | II |
| | Absorp.,% | 54 | 54 | 54 | 54 | 53 | 53 |
| | Mix Time | 1 LD-1L-3H | 1 LD-1L-3H | 1 LD-1L-3H | 1 LD-1L-3H | 2.5H | 2.5H |
| | Dough Temp., °F | 75 | 74 | no meas. | 71 | 72.5 | 72.4 |
| Extruder | Outer Horn, length in mm | 127 | 127 | 127 | 127 | 127 | 127 |
| | Inner Horn, length in mm | 0 | 0 | 127 | 0 | 76 | 76 |
| | Screw Set | 72N | 72N | 72CC | 72N | 72N | 72N |
| | Vacuum,% | 100 | 100 | 100 | 100 | 50 | 100 |
| | V-speed | 19 | 22 | 22 | 19 | 19 | 22 |
| | Weight | 0.27 | 0.27 | 0.27 | 0.275 | 0.265 | 0.265 |
| | Piece: | | | | | | |
| | Length, inch | 6.5 | 6.5 | 6.5 | 6.5 | 6.5 | 6.5 |
| | Crimper | blade | blade | blade | blade | blade | blade |
| | Piece/min. | 50 | 50 | 50 | 50 | 50 | 60 |
| Panning | Pan Type | flat | flat | flat | flat | flat | flat |
| | Pieces/pan | 15 | 15 | 15 | 15 | 15 | 15 |
| Proofing | Temp.,°F | 85 | 85 | 85 | 85 | 85 | 85 |
| | Rel. Hum. | 45 | 45 | 45 | 45 | 45 | 45 |
| | Time | 35 | 35 | 35 | 35 | 35 | 35 |
| Boiling | Water Temp.,°F | 200 | 200 | 200 | 206 | 206 | 206 |
| | Time/side (sec) | 30 | 30 | 30 | 60 | 60 | 60 |
| Baking | Temp., °F | 450 | 450 | 450 | 450 | 450 | 450 |
| | Time, min | **8** | **8** | **8** | **8** | **8.5** | **8** |
| | Top: Bottom Air | 3@Top in 2-4, 3@Bot. in 1-3 | 3@Top in 2-4, 3@Bot. in 1-3 | 3@Top in 2-4, 3@Bot. in 1-3 | 3@Top in 2-4, 3@Bot. in 1-3 | 3@Top in 2-4, 3@Bot in 1-3 | 3@Top in 2-4, 3@Bot. in 1-3 |
| | Internal Bake Temp.,° F | 207 | >200 | 200 | 200 | 200 | 200 |

A control run, Control 2, is identified as "C2" in Tables 4-5. Overall Dough Quality results for this additional set of experimental runs are set forth in Table 5. In addition to the opaque scores, which were defined in Example 1, grain, volume, and color attributes additionally were evaluated and determined for the filled bagel products of these additional runs.

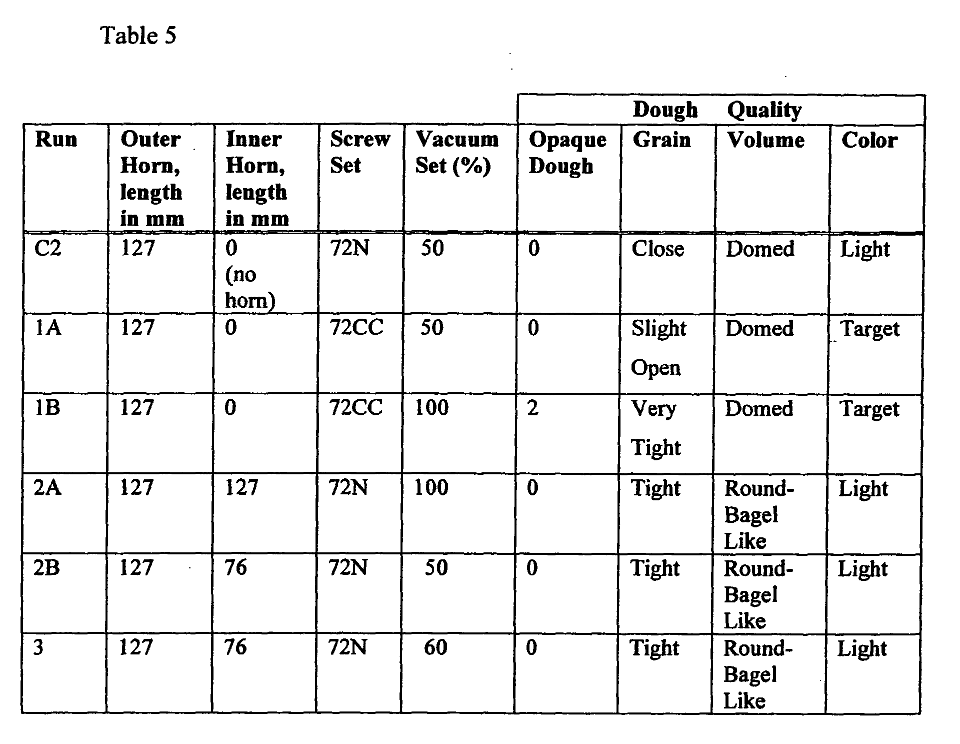

The results in Tables 2-5 show that reducing the outer horn path length, and effectively the path length geometry of the outer horn at its discharge end, significantly reduced opaque dough (e.g., compare runs 3A vs. 4A1). Cutting off the narrow end of the original outer horn reduced the most restricted path length of the dough and significantly reduced opaque dough without adversely affecting the shape of the extruded dough.

Minimizing the path length of the inner horn had a minimal (lesser) yet measurable effect in reducing opaque dough. The results show that removal of the inner horn improved the dough flow and improved the opaque dough slightly (compare runs 2 vs. 3A, and 4B2 vs. 2B).

The results also revealed that reducing the vacuum from 100% to 50% significantly reduced opaque dough (runs 3A vs. 3B and 4A1 vs. 4A2). 50% vacuum reductions at the dough hopper appeared to significantly reduce opaque dough. Upon 50% vacuum reduction, the dough flow hesitated at the end of the outer horn in a recurring intermittent manner that was almost resonant.

Opaque dough was completely eliminated in run 4A2 as a synergistic effect of reduced vacuum, a shortened path on the outer horn, and shortened path on the inner horn.

While the invention has been particularly described with specific reference to particular process and product embodiments, it will be appreciated that various alterations, modifications and adaptations may be based on the present disclosure, and are intended to be within the spirit and scope of the present invention as defined by the following claims.

## Claims

1. A method of making a filled dough product, comprising:
providing an extrusion head including
- an outer horn having an outer horn passageway extending a first axial length between an outer horn inlet to an outer horn outlet, and
- an inner horn located co-axially inside and circumferentially separated from the outer horn to define the outer horn passageway therebetween,
wherein the inner horn has an inner horn passageway extending a second axial length between an inner horn inlet to an inner horn outlet;
conducting dough through the outer horn passageway to the outer horn outlet and an edible filling material through the inner horn passageway to the inner horn outlet, wherein dough discharged from the outer horn outlet enrobes edible filling material discharged from the inner horn outlet to form an extruded rope;
wherein the providing of the extrusion head includes selecting the first and second axial lengths, respectively, such that the discharging of the dough occurs with less dough shearing than when either the first or second axial lengths is larger.

2. A method for making a filled bagel product, comprising:
providing:
- an extrusion head comprising:
- an outer horn having an outer horn passageway extending a first axial length between an outer horn inlet to an outer horn outlet,
- an inner horn located co-axially inside and circumferentially separated from the outer horn to define the outer horn passageway therebetween,
wherein the inner horn has an inner horn passageway extending a second axial length between an inner horn inlet to an inner horn outlet,
- a bagel dough supply, and a dough transport mechanism between the bagel dough supply and the outer horn,
- an edible filling material supply, and a filling feeding mechanism between the filling material supply and the inner horn,
conducting bagel dough through the outer horn passageway to the outer horn outlet and an edible filling material through the inner horn passageway to the inner horn outlet, wherein bagel dough discharged from the outer horn outlet enrobes edible filling material discharged from the inner horn outlet to form an extruded rope, wherein the providing of the extrusion head includes selecting the first and second axial lengths, respectively, such that the discharging of the bagel dough occurs with less dough shearing than when either the first or second axial lengths is larger;
cutting the extruded rope into at least one filled bagel dough segment having a first free end and second free end; and connecting the first and second free ends together to form a continuous ring-shaped food product.

3. The method of Claim 2, further including the steps of:
proofing the ring-shaped food product effective to activate a yeast to raise the bagel dough through fermentation;
cooking the bagel dough of the ring-shaped food product after proofing by a surface heating procedure selected from steaming, boiling, or a combination thereof.

4. The method of Claim 3, wherein the cooking comprises boiling.

5. The method of any one of Claims 2 to 4, wherein the conducting of the bagel dough comprises drawing a vacuum pressure on the bagel dough supply of a magnitude effective for (i) entraining bagel dough into the dough transport mechanism such that bagel dough discharged from the outer horn discharge outlet enrobes filling material discharge from the inner horn outlet to form an extruded rope, and (ii) causing intermittent pauses in the discharge of bagel dough from the outer horn outlet wherein the discharged bagel dough is less sheared than bagel dough supplied at a greater magnitude of vacuum pressure sufficient to discharge the bagel dough from the outer horn outlet without the pauses.

6. The method of any one of Claims 2 to 5, wherein the first axial length of the outer horn is selected to be about 25 to about 35% shorter in length than a larger axial length where opaque dough occurs.

7. The method of any one of Claims 2 to 6, wherein the second axial length of the inner horn being selected to be about 35 to about 45% shorter in length than a larger axial length where dough shearing occurs.

8. The method of any one of Claims 1 to 7, wherein the outer horn passageway tapers inwardly in cross sectional shape from the outer horn inlet to the outer horn outlet.

9. The method of any one of Claims 2 to 7, wherein the dough transport mechanism and the filling feeding mechanism each comprise a twin-screw conveyor.

10. The method of any one of Claims 1 to 9, wherein the inner horn passageway has a substantially constant cross sectional diameter from the inner horn inlet to the inner horn outlet, and wherein the inner horn outlet is located axially within the outer horn passageway.

11. The method of any one of Claims 1 to 10, wherein the outer horn has an L/D ratio value, measured as the ratio of the outer horn length (L)/outer horn average internal diameter (D), of less than 5.0.

12. The method of any one of Claims 1 to 11, wherein the outer horn has an L/D ratio value, measured as the ratio of the outer horn length (L)/outer horn average internal diameter (D), in the range of 3.0 to 4.0.

13. The method of any one of Claims 1 to 12, wherein a cross sectional shape of the extruded rope substantially corresponds to a cross sectional shape of the extruded rope when either the outer horn axial length or the inner horn axial length is enlarged to the extent that the dough incurs more shearing.

14. The method of any one of Claims 1 to 13, wherein the outer horn and inner horn are both arranged substantially horizontally relative to force of gravity.

15. The method of any one of Claims 1 to 14, wherein the bagel dough material comprises a protein content of at least about 11%.

16. The method of any one of Claims 1 to 15, wherein the edible filling material comprises an extrudable material selected from a processed meat product, a diary product, an egg product, a seafood product, a processed legume product, a processed vegetable product, a processed fruit product, individually or in any combination thereof.

17. The method of any one of Claims 1 to 15, wherein the filling material comprises cream cheese.

18. The method of any one of Claims 1 to 15, wherein the filling material comprises an extrudable food material selected from cheese, egg product, and meat, individually or in a combination thereof.

19. An extrusion head useful for making filled food products, comprising:
an outer horn having an outer horn passageway extending a first axial length between an outer horn inlet adapted to receive a coating food to an outer horn outlet adapted to discharge the coating food, wherein the outer horn passageway tapers inwardly in cross sectional shape from the outer horn inlet to the outer horn outlet; and
an inner horn located co-axially inside and circumferentially separated from the outer horn to define the outer horn passageway therebetween, wherein the inner horn has an inner horn passageway extending a second axial length between an inner horn inlet adapted to receive filling material to an inner horn outlet adapted to discharge filling material, wherein the second passageway of the second horn has a substantially constant cross sectional diameter from the inner horn inlet to the inner horn outlet, and wherein the inner horn outlet is located axially within the outer horn passageway, and wherein the outer horn and inner horn are both arranged substantially horizontally relative to force of gravity.

20. An extruder for making filled food products, comprising:
an extrusion head comprising:
- an outer horn having an outer horn passageway extending a first axial length between an outer horn inlet adapted to receive a coating food to an outer horn outlet adapted to discharge the coating food, wherein the outer horn passageway tapers inwardly in cross sectional shape from the outer horn inlet to the outer horn outlet,
- an inner horn located co-axially inside and circumferentially separated from the outer horn to define the outer horn passageway therebetween,
wherein the inner horn has an inner horn passageway extending a second axial length between an inner horn inlet adapted to receive filling material to an inner horn outlet adapted to discharge filling material, wherein the second passageway of the second horn has a substantially constant cross sectional diameter from the inner horn inlet to the inner horn outlet, and wherein the inner horn outlet is located axially within the outer horn passageway, and wherein the outer horn and inner horn are both arranged substantially horizontally relative to force of gravity;
a dough supply container, and a dough transport mechanism between the dough supply container and the outer horn; and
an edible filling material supply container, and a filling feed mechanism operable to conduct filling material from the edible filling material supply container to the inner horn.
